# EUROPÄISCHE PATENTSCHRIFT

(11) **EP 0 758 710 B1**
(45) Veröffentlichungstag und Bekanntmachung des Hinweises auf die Patenterteilung: **26.01.2000**
(21) Anmeldenummer: 96112694.3
(22) Anmeldetag: 07.08.1996
(51) Int. Cl.: E06B 7/16, B65G 69/00

(54) **Vorrichtung für den Witterungsschutz zum Überbrücken des Spaltes zwischen dem Heck eines andockenden Fahrzeuges und dem Rand einer Gebäudeöffnung**
Device for the weather proof bridging of the gap between the rear of a vehicle and the border of a wall opening
Dispositif pour protéger contre les intempéries l'espace entre l'arrière d'un véhicule et l'embrasure d'une ouverture dans un bâtiment

(30) Priorität: 16.08.1995 DE 29513120 U
(43) Veröffentlichungstag der Anmeldung: 19.02.1997
(73) Patentinhaber: Alten Gerätebau GmbH, 30974 Wennigsen (DE)
(72) Erfinder: Alten, Kurt, 30967 Wennigsen (DE)
(74) Vertreter: Depmeyer, Lothar

(56) Entgegenhaltungen:
- EP-A- 0 173 929
- EP-A- 0 641 732
- US-A- 4 805 362
- US-A- 4 873 801

## Beschreibung

Die Erfindung betrifft eine Vorrichtung für den Witterungsschutz zum Überbrücken des Spaltes zwischen dem Heck eines andockenden Fahrzeuges und dem Rand einer Gebäudeöffnung, wobei sich im Abstand vom Gebäude eine senkrecht herabhängende, verformbare, lappige Schürze befindet, die im Bereich des oberen Gebäudeöffnungsrandes einen Querstreifen und zu beiden Seiten der Gebäudeöffnung einen senkrechten Streifen aufweist, wobei sich vom oberen Schürzenrand zum Gebäude hin ein Dachteil und von den Seitenrändern der Schürze zum Gebäude hin ein Seitenteil erstreckt.

Die bekannten Vorrichtungen dieser Art sind im Bereich der seitlichen Ränder und am oberen Rand der Schürze durch in Richtung auf das Gebäude nachgiebig bewegliche Versteifungen aus Metallprofilen verstärkt (EP-A-0 173 929). Derartige Vorrichtungen sind für Wagenaufbauten geeignet, die am Heck durch senkrechte Wandungsteile begrenzt sind. Ungeeignet sind diese Vorrichtungen für solche Fahrzeuge, die - bei Betrachtung des Fahrzeuges von der Seite her - im oberen Bereich stark zurückspringen. Weniger geeignet sind diese Vorrrichtungen ferner für Fahrzeuge, deren Heckklappen sich nur um etwa 180° verschwenken lassen, also beim geöffneten Fahrzeug seitlich abstehen.

Der obigen Erfindung liegt die Aufgabe zugrunde, eine Vorrichtung der obigen Art vorzuschlagen, die mit einfachen Mitteln in besonderer Weise für die vorerwähnten Fahrzeuge geeignet ist.

Zur Lösung dieser Aufgabe sind erfindungsgemäß die beiden Streifen an ihren seitlich außen gelegenen Rändern unversteift und gegenüber den benachbarten Rändern der Seitenteile frei beweglich bzw. mit diesen nicht verbunden, und die Streifen und die Seitenteile bestehen nach Art von Streifenvorhängen aus mehreren einzelnen Streifen, und zu beiden Seiten im Bereich der Ränder der Gebäudeöffnung sind senkrecht verlaufende Polsterkörper angeordnet, deren Wirkflächen im Abstand von den Streifen angeordnet sind.

Eine so ausgeführte Vorrichtung ist besonders verformungsfreudig, da die als Streifenvorhang ausgeführten Teile der Vorrichtung einer Verformung einen sehr geringen Widerstand entgegensetzen. Die weit nach hinten in Richtung auf das Gebäude vorspringenden Teile der andockenden Fahrzeuge finden dabei ihre elastische Anlage und auch Abdichtung an den hinter der Schürze angeordneten Polsterkörpern, während die vom Gebäude weiter entfernten Teile des Fahrzeughecks an der Schürze bzw. den Seitenteilen elastisch anliegen und dort eine ausreichende Abdichtung gegen die Einflüsse der Witterung und dgl. erfahren.

Weitere Einzelheiten der Erfindung werden anhand der Zeichnung erläutert, in der eine Vorrichtung der eingangs erwähnten Art dargestellt ist. Es zeigen :
Fig. 1 eine Vorrichtung für den Witterungsschutz zum Abdichten und zum Überbrücken des Spaltes zwischen dem Heck eines andockenden Fahrzeuges und dem Rand einer Gebäudeöffnung in der Teilansicht,
Fig. 2 einen Schnitt nach der Linie II - II von Fig. 1,
Fig. 3 einen Schnitt nach der Linie III - III von Fig. 1,
Fig. 4 einen Teilschnitt in vergrösserter Darstellung durch das Dachteil der Vorrichtung dem Schnitt gemäss Fig. 3 entsprechend,
Fig. 5 eine Teildraufsicht auf einen Endbereich des Dachteils gemäss Fig. 4,
Fig. 6 einen Schnitt nach der Linie VI - VI von Fig. 4 und
Fi. 7 einen Schnitt nach der Linie VII - VII von Fig. 1.

Das Gebäude 1 z.B. ein Lagerhaus hat eine rechteckige Toröffnung 2 und einen nicht dargestellten Verschluss dafür z.B. in Form eines Sektionaltores. Die Bodenfläche des Gebäudes 1 ist mit 3, die beiden seitlichen Ränder der Toröffnung 2 mit 4 und der obere Rand mit 5 bezeichnet.

Die Vorrichtung besteht im wesentlichen aus einem Dachteil 6, einer vorne angeordneten, parallel zur Gebäudewand angeordneten biegsamen z.B. aus gummiertem Gewebe bestehenden Schürze 7 und zu beiden Seiten davon angeordneten Seitenteilen 8, ebenfalls aus einer biegsamen Plane z. B. gummiertem Gewebe. Die Schürze 7 ist ein auf dem Kopf stehendes U, die Seitenteile 8 erstrecken sich von den seitlichen Rändern 9 der Schürze 7 zur Aussenwand des Gebäudes 1. Hinzu kommen zwei senkrecht verlaufende, streifenförmige etwa quadratische Polsterkörper 10, die nahe an den Rändern 4 aussen am Gebäude 1 befestigt sind und sich über die gesamte Höhe der Schürze 7 erstrecken.

Das Dachteil 6 wird von einem Metallblech 6' gebildet, es hat hinten eine Abwinkelung 11 nach oben, die zur Befestigung des Dachteils 6 am Gebäude 1 dient; am vorderen Rand ist eine weitere Abwinkelung 12, die zur Befestigung des oberen Randes der Schürze 7 und der Seitenteile 8 dient. Der Versteifung des Metallblechs dienen mehrere senkrecht zum Gebäude 1 verlaufende, oben aufgesetzte Winkelprofile 13, die auch den Abschluss seitlich aussen am Dachteil 6 bilden. Um etwaiges Regenwasser abzuleiten, sind die Winkelprofile an ihren Enden mit Aussparungen 14 versehen, und zwar unten an ihren Enden, also an ihren den Abwinkelungen 11, 12 zugekehrten Stellen. Damit diese Aussparungen 14 durch die aufgesetzten Seitenteile 8 nicht verdeckt werden, sind die Seitenteile 8 geringfügig schmaler gehalten als die Länge der Metallprofile 13. Am vorderen Rand des Metallblechs 6' greift noch eine Zugstrebe 14 an, die am Gebäude 1 fixiert ist.

Die Schürze 7 besteht aus einem Querteil 15, das von oben her bis an den Rand 5 reicht, und aus zwei senkrechten Streifen 16, die bis an zwei in der Toröffnung angeordnete und zum Begehen des andockenden Fahrzeuges dienende Stufen 17 herangeführt sind. Die Streifen 16 überdecken - in der Vorderansicht gesehen - die Kanten 4.

Die Streifen 16 sind ihrerseits wieder aus zwei vorne liegenden Streifen 18 und einem die Fuge zwischen beiden Streifen 18 überdeckenden, hinten gelegenen Streifen 19 gebildet. Diese frei verformbaren Streifen 18, 119 gehen oben einstückig ineinander über, um eine bessere Befestigung am Dachteil 6 herbeiführen zu können.

Ebenfalls frei herab hängen die Seitenteile 8, die ihrerseits drei Streifen 20 bilden. Zwischen den Streifen 20 und den Streifen 18 im Eckbereich der Vorrichtung besteht keine Verbindung; hier ist also keine Versteifung vorgesehen, um eine weitgehende, leichte Verformbarkeit herbeizuführen.

Zum Abdichten und Abfangen der zum Gebäude 1 hin vorspringenden Teile des Fahrzeuges sind die beiden Polsterkörper 10 vorgesehen, deren Abstand A von der Schürze 7 im wesentlichen der Dicke des Polsterkörpers 10 entspricht, um so sicherzustellen, dass bei einer Beaufschlagung der Vorrichtung durch ein Fahrzeug zunächst die Schürze 7 und die Seitenteile 8 elastisch und abdichtend verformt werden. Zur weiteren Abdichtung weisen die beiden Polsterkörper 10 noch zur Gebäudeöffnung hin gerichtete Überstände 22 auf, die aus einer lappigen Plane bestehen.

Es ist nicht unbedingt erforderlich, die Streifen 16 bis hinunter zu den Stufen 17 zu führen, vielmehr können die Streifen 16 auch schon höhenmässig vor diesen Stufen enden, vorzugsweise schon auf einer Höhe, die durch den Pfeil x aufgezeigt ist

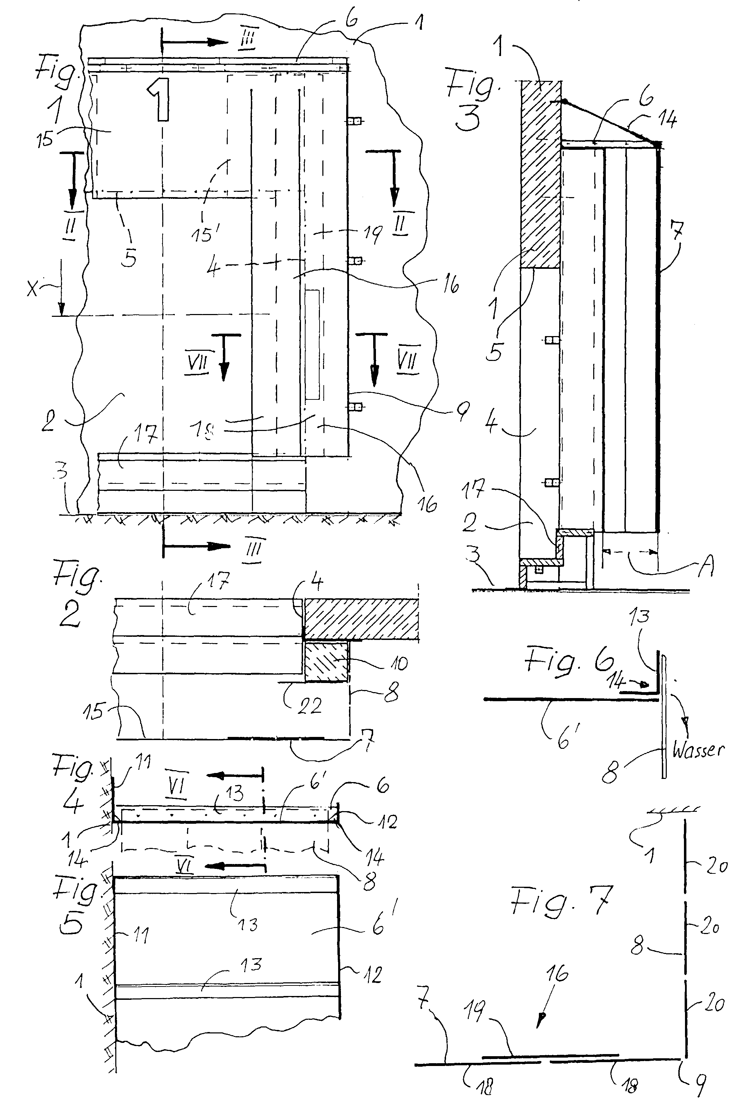

Wie aus Fig. 1 erkennbar ist, endet der Querstreifen 15 an beiden Enden vor den Streifen 16 bzw. 18. Die dabei entstehende Fuge ist von hinten durch einen zusätzlichen senkrechten Streifen 15' überbrückt.

## Patentansprüche

1. Vorrichtung für den Witterungsschutz zum Überbrücken des Spaltes zwischen dem Heck eines andockenden Fahrzeuges und dem Rand einer Gebäudeöffnung, wobei sich im Abstand vom Gebäude eine senkrecht herabhängende, verformbare, lappige Schürze befindet, die im Bereich des oberen Gebäudeöffnungsrandes einen Querstreifen und zu beiden Seiten der Gebäudeöffnung einen senkrechten Streifen aufweist, wobei sich vom oberen Schürzenrand zum Gebäude hin ein Dachteil und von den Seitenrändern der Schürze zum Gebäude hin ein Seitenteil erstreckt, dadurch gekennzeichnet, daß die beiden Streifen (16) an ihren seitlich außen gelegenen Rändern unversteift und gegenüber den benachbarten Rändern der Seitenteile (8) frei beweglich bzw. mit diesen nicht verbunden sind, daß die Streifen (16) und die Seitenteile (8) nach Art von Streifenvorhängen aus mehreren einzelnen Streifen bestehen und daß zu beiden Seiten im Bereich der Ränder (4) der Gebäudeöffnung senkrecht verlaufende Polsterkörper (10) angeordnet sind, deren Wirkflächen im Abstand von den Streifen (16) angeordnet sind.

2. Vorrichtung nach Anspruch 1, dadurch gekennzeichnet, daß der freie Raum (A) zwischen den Streifen (16) und der Wirkfläche der Polsterkörper (10) zumindest im wesentlichen der Höhe der Polsterkörper entspricht.

3. Vorrichtung nach Anspruch 1, dadurch gekennzeichnet, daß das Dachteil (6) von einem Metallblech (6') gebildet ist, das einen umlaufenden Rand aus nach oben gerichteten Abwinkelungen aufweist, wobei die vorne und seitlich außen gelegene Abwinkelung (13, 12) zur Befestigung der Schürze (7) und der Seitenteile (8) dient.

4. Vorrichtung nach Anspruch 3, dadurch gekennzeichnet, daß das Metallblech (6') vorne und hinten nach oben abgewinkelt ist, wobei die hinten gelegene Abwinkelung (11) zur Befestigung des Dachteils (8) am Gebäude (1) dient.

5. Vorrichtung nach Anspruch 3, dadurch gekennzeichnet, daß das Metallblech (6') durch mehrere senkrecht zum Gebäude (1) gerichtete, oben aufgesetzte Winkelprofile (13) versteift ist, die an ihren Enden an der dem Metallblech zugekehrten Seite mit Aussparungen (14) zum Wasserdurchtritt versehen sind.

6. Vorrichtung nach Anspruch 1, dadurch gekennzeichnet, daß die seitlichen Streifen (16) aus zwei Streifen (18) bestehen.

7. Vorrichtung nach Anspruch 6, dadurch gekennzeichnet, daß sich hinter den Streifen (18) ein ihre Trennfuge überdeckender Streifen (19) befindet.

8. Vorrichtung nach Anspruch 1, dadurch gekennzeichnet, daß die Seitenteile (8) von drei Streifen (20) gebildet sind.

9. Vorrichtung nach Anspruch 1, dadurch gekennzeichnet, daß die seitlichen Streifen (16) etwa auf halber Höhe der Gebäudeöffnung (2) enden.

10. Vorrichtung nach Anspruch 1, dadurch gekennzeichnet, daß sich in der Gebäudeöffnung (2) eine oder mehrere zum Betreten der Ladefläche des Fahrzeuges dienende Stufen (17) befinden und daß die seitlichen Streifen (16) bis in die Höhe der höchsten Stufen reichen.

11. Vorrichtung nach Anspruch 1, dadurch gekennzeichnet, daß die Polsterkörper (10) an ihrer Vorderseite einen zur Gebäudeöffnung (2) hin gerichteten, aus einer Plane bestehenden, lappigen Überstand (22) aufweisen.

12. Vorrichtung nach Anspruch 1, dadurch gekennzeichnet, daß der Querstreifen (15) bis an die seitlichen Streifen (16) reicht und die Trennfuge zwischen dem Querstreifen (15) und den seitlichen Streifen (16) durch einen weiteren Streifen (15') hinterlegt ist.

## Claims

1. Apparatus for protection against the weather and for bridging the gap between the rear of a vehicle being positioned thereat and the edge of a building opening, including a vertically suspended, deformable, soft apron situated at a spacing from the building, Which apron has a transverse strip in the region of the upper edge of the building opening and a vertical strip on both sides of the building opening, a top portion extending from the upper apron edge to the building, and a lateral portion extending from the lateral edges of the apron to the building, characterised in that the two strips (16) are not reinforced at their laterally outer edges and are freely displaceable relative to the adjacent edges of the lateral portions (8), i.e. they are not connected to said lateral portions, in that the strips (16) and he lateral portions (8) comprise a plurality of individual strips in the form of strip-type curtains, and in that vertically extending cushioning members (10) are disposed on both sides in the region of the edges (4) of the building opening, the operative faces of said cushioning members being disposed at a spacing from the strips (16).

2. Apparatus according to claim 1, characterised in that the free space (A) between the strips (16) and the operative face of the cushioning members (10) corresponds at least substantially to the thickness of the cushioning members.

3. Apparatus according to claim 1, characterised in that the top portion (6) is formed by a sheet metal plate (6'), which has a surrounding edge comprised of upwardly orientated angles, the front and laterally outer angle (13, 12) being used for the securement of the apron (7) and the lateral portions (8).

4. Apparatus according to claim 3, characterised in that the sheet metal plate (6') is angled upwardly at the front and rear, the rear angle (11) being used to secure the top portion (8) on the building (1).

5. Apparatus according to claim 3, characterised in that the sheet metal plate (6') is reinforced by a plurality of angular profiles (13), which are orientated perpendicularly relative to the building (1) and are mounted on the upper end, said profiles being provided with recesses (14), for the passage of water, at their ends on the side facing the sheet metal plate.

6. Apparatus according to claim 1, characterised in that the lateral strips (16) comprise two strips (18).

7. Apparatus according to claim 6, characterised in that a strip (19) is situated behind the strips (18) and covers their butt joint.

8. Apparatus according to claim 1, characterised in that the lateral portions (8) are formed by three strips (20).

9. Apparatus according to claim 1, characterised in that the lateral strips (16) terminate approximately halfway up the building opening (2).

10. Apparatus according to claim 1, characterised in that one or more of the steps (17), which are used for stepping on the loading area of the vehicle, are situated in the building opening (2), and in that the lateral strips (16) extend to the level of the highest steps.

11. Apparatus according to claim 1, characterised in that the cushioning members (10) have, at their front side, a soft projection (22), which is orientated towards the building opening (2) and comprises a cover.

12. Apparatus according to claim 1, characterised in that the transverse strip (15) extends to the lateral strips (16), and the butt joint between the transverse strip (15) and the lateral strips (16) is backed by an additional strip (15').

## Revendications

1. Dispositif de protection vis-à-vis des intempéries de l'intervalle compris entre le bord d'une baie d'un bâtiment et l'arrière d'un véhicule qui y accoste, une jupe se trouvant à distance du bâtiment, cette jupe étant flasque, déformable, pendante verticalement, et comportant dans la région du bord supérieur de la baie du bâtiment une bande transversale et de part et d'autre de l'ouverture du bâtiment une bande verticale, une partie formant toit s'étendant du bord supérieur de la jupe au bâtiment et une partie latérale s'étendant des bords latéraux de la jupe au bâtiment, caractérisé en ce que les deux bandes (16) ne sont pas rigides sur leur bord disposé latéralement à l'extérieur et sont mobiles librement par rapport au bord voisin des parties (8) latérales ou ne sont pas reliées à celles-ci, en ce que les bandes (16) et les parties (8) latérales sont constituées, à la manière de rideaux à bandes, de plusieurs bandes et en ce que, des deux côtés dans la région des bords (4) de la baie du bâtiment, il est monté des coussins (10) s'étendant verticalement et dont les surfaces actives sont à distance des bandes (16).

2. Dispositif suivant la revendication 1, caractérisé en ce que l'espace (A) libre compris entre les bandes (16) et les surfaces actives des coussins (10) correspond au moins sensiblement à la hauteur des coussins.

3. Dispositif suivant la revendication 1, caractérisé en ce que la partie (6) formant toit est formée par une tôle (6') métallique qui a un bord faisant le tour et qui est constituée de parties coudées dirigées vers le haut, les parties coudées (13, 12) avant et à l'extérieur latéralement servant à fixer la jupe (16) et les parties (8) latérales.

4. Dispositif suivant la revendication 3, caractérisé en ce que la tôle (6') métallique est coudée vers le haut en avant et en arrière, le coude (11) vers l'arrière servant à fixer la partie (8) formant toit au bâtiment (1).

5. Dispositif suivant la revendication 3, caractérisé en ce que la tôle (6') métallique est raidie par plusieurs profilés (13) en équerre, qui sont dirigés perpendiculairement au bâtiment (1), qui sont posés en haut et qui sont munis à leur extrémité du côté tourné vers la tôle métallique d'évidements (14) pour le passage de l'eau.

6. Dispositif suivant la revendication 1, caractérisé en ce que les bandes (16) latérales sont constituées de deux bandes (18).

7. Dispositif suivant la revendication 61, caractérisé en ce que derrière les bandes (18) se trouve une bande (19) recouvrant une fente.

8. Dispositif suivant la revendication 1, caractérisé en ce que les parties (8) latérales sont formées de trois bandes (20).

9. Dispositif suivant la revendication 1, caractérisé en ce que les bandes (9) latérales se terminent à peu près à mi-hauteur de la baie (2) du bâtiment.

10. Dispositif suivant la revendication 1, caractérisé en ce qu'il y a, dans la baie (2) du bâtiment, un ou plusieurs paliers (17) servant à l'entrée de la surface de charge du véhicule automobile et en ce que les bandes (16) latérales vont jusqu'au niveau du palier le plus élevé.

11. Dispositif suivant la revendication 1, caractérisé en ce que les coussins comportent sur leur côté avant un dépassement (20) flasque qui est dirigé vers la baie (2) du bâtiment et qui est constitué d'une bâche (22).

12. Dispositif suivant la revendication 1, caractérisé en ce que les bandes (15) transversales vont jusqu'aux bandes (16) latérales et la fente comprise entre les bandes (15) transversales et les bandes (16) latérales est cachée par une autre bande (15').
